# EUROPÄISCHE PATENTANMELDUNG

(11) **EP 3 885 318 A1**
(43) Veröffentlichungstag der Anmeldung: **29.09.2021**
(21) Anmeldenummer: 20166327.5
(22) Anmeldetag: 27.03.2020
(51) Int. Cl.: C01G 49/06, C09C 1/00, C09C 1/24, C01B 25/37

(54) **FARBSTARKE MANGANFERRIT-FARBPIGMENTE**

(71) Anmelder: LANXESS Deutschland GmbH, 50569 Köln (DE)
(72) Erfinder: ROSENHAHN, Carsten, Dr., 47906 Kempen (DE); HEMPELMANN, Uwe, 40670 Meerbusch (DE)

(57) **Zusammenfassung**

Die vorliegende Erfindung betrifft farbstarke Manganferrit-Farbpigmente, deren Herstellung und deren Verwendung.

## Beschreibung

Die vorliegende Erfindung betrifft farbstarke Manganferrit-Farbpigmente, deren Herstellung und deren Verwendung.

Manganferrite der allgemeinen Zusammensetzung Mn₁₊ₓFe₂₋ₓO₄ [x=-0,8 bis + 0,8] sind bis zu über 1000 °C temperaturbeständig, und eignen sich insbesondere für die Einarbeitung in Materialien, die einer Hitzehärtung unterworfen sind. Für solche Anwendungsgebiete sind Eisenoxidschwarzpigmente auf Basis von Fe₃O₄ unbrauchbar, weil dieses Oxid bekanntlich oberhalb von ca. 200 °C zum braunen oder roten Fe₂O₃ oxidiert wird.

Aus der Patentliteratur sind bereits einige temperaturstabile Schwarzpigmente bekannt. Zum Beispiel wird in der US 2,811,463 A1 ein Produkt mit den Hauptbestandteilen Cu-, Mn-, und Fe-Oxid und in der US 3,201,270 A1 ein Schwarzpigment mit den Hauptbestandteilen Co₃O₄, Cr₂O₃ und Fe₃O₄ beschrieben. Diese Pigmente erhalten jedoch Kupfer und Kobalt, was von den Kunden unerwünscht ist. Kupfer und Kobalt sind zudem Schwermetalle und können die Umwelt beeinträchtigen.

Ferner ist aus DE 1 191 063 A1 ein Verfahren zur Herstellung eines temperaturbeständigen Eisenoxidschwarzpigmentes, das außer Eisenoxid etwa 7 % bis 20 % Manganoxid enthält, bekannt. Dieses Pigment hat jedoch zwei wesentlich Nachteile: es besitzt einen unerwünschten rotstichigen Farbton und eine relativ geringe Farbstärke. Der sogenannte Rotstich macht sich sowohl im konzentrierten Zustand des Pigmentes als auch im Verschnitt häufig nachteilig bemerkbar. Mit einem weißen Verschnittmittel (z.B. Titandioxid oder Bariumsulfat) erhält man kein neutrales, sondern ein rotstichiges Grau. Die geringe Farbstärke bedingt einen höheren Mengeneinsatz des Pigmentes, um zu einer bestimmten Graustufe zu gelangen. Durch diese höhere Pigmentmenge können wichtige Eigenschaften des pigmentierten Material, wie zum Beispiel die Festigkeit, beeinträchtigt werden.

In der DE 1 767 868 A1 wird deshalb gezeigt, dass Manganferrite, welche aus einer feinteiligeren Ausgangspaste hergestellt werden, eine verbesserte Farbstärke gegenüber dem damaligen Stand der Technik aufweisen. Solche Pigmente konnten die Farbstärke der Pigmente auf das etwa Dreifache des Standes der Technik steigern, und sind bis heute das Maß der Dinge geblieben. Ebenfalls wird in der DE 1 767 868 A1 beschrieben, dass Mineralisatoren die erforderliche Glühtemperatur zur Erzeugung der gewünschten Pigmente herabsetzen können.

In DE 3 304 635 A1 wird beschrieben, dass die Glühung auch mit pelletierten Mischungen durchgeführt werden kann.

Nachteilig an allen der im oben genannten Stand der Technik aufgeführten Pigmenten bleibt, dass die Farbstärke von Pigmenten auf Basis von Manganferrit im Vergleich zu Farbpigmenten auf Basis von Fe₃O₄ zu gering ist.

Die späteren Entwicklungen zur Erzeugung verbesserter Manganferrit-Farbpigmente, welche in DE 3 841 313 A1 und DE 4 003 255 A1 beschrieben sind, umfassen die Herstellung in der Nassphase aus löslichen Salzen und durch Fällung mit Natronlauge. Diese Pigmente sind aufgrund des hohen Natronlaugeverbrauchs ökologisch bedenklich und nur sehr unwirtschaftlich herzustellen.

Aufgabe der vorliegenderen Erfindung war es daher, verbesserte farbstarke Manganferrit-Farbpigmente bereit zu stellen, die vorzugsweise auch Temperaturstabilität aufweisen und die umweltfreundlich ohne Natronlauge hergestellt werden können.

Diese Aufgabe wurde gelöst durch ein Manganferrit-Schwarzpigment mit einem Gehalt von MnO von 5,0 bis 40,0 Gew.-% und einem Gehalt an Phosphat von 1,5 bis 3,0 Gew.-%, das ein Verschnittverhältnis für den Farbtiefekennwert B 1/9 nach DIN 53235 Teil 1 und 2 von > -12,0, insbesondere > -10,0 aufweist.

Das Manganferrit-Schwarzpigment weist vorzugsweise einen Gehalt von MnO von 8,0 bis 35,0 Gew.-% auf.

Das Manganferrit-Schwarzpigment weist vorzugsweise einen Gehalt an Phosphat von 1,5 bis 2,0 Gew.-%, bevorzugt von 1,7 bis 1,8 Gew.-% auf.

Ganz besonders bevorzugt weist das Manganferrit-Schwarzpigment ein Verschnittverhältnis für den Farbtiefekennwert B 1/9 nach DIN 53235 Teil 1 und 2 von - 10,0 bis - 6,0 auf.

Die Farbstärke der Manganferrit-Schwarzpigmente ist vorzugsweise von 40 % bis 120 % stärker, bevorzugt von 90 % bis 115 % stärker gegenüber Manganferrit-Farbpigmenten, die einen Phosphatgehalt von < 0,5 % aufweisen.

Die Methode zur Messung des Verschnittverhältnises für den Farbtiefekennwert B 1/9 sowie die Farbstärke sind in den Beispielen angegeben.

Die Erfindung umfasst auch ein Verfahren zur Herstellung eines Manganferrit-Schwarzpigments, dadurch gekennzeichnet, dass
- oxidische oder oxidbildende Ausgangsstoffe des Eisens und Mangans unter Zusatz von Alkalisalzen und organischen und/oder anorganischen Phosphaten miteinander gemischt werden, und
- die Mischung anschließend bei Temperaturen oberhalb von 600 °C, bevorzugt oberhalb von 700 °C geglüht wird, wobei die Glühatmosphäre einen Sauerstoffgehalt von 7 bis 25 % aufweist.

Vorzugsweise beträgt dabei der Gehalt von MnO von 5 bis 40 Gew.-%, bevorzugt von 8,0 bis 35,0 Gew.-%; der Gehalt von Fe, gerechnet als Fe₂O₃, von 50,0 bis 95,0 Gew.-%, bevorzugt von 65,0 bis 90,0 Gew.-%; und der Gehalt an Phosphat von 1,5 bis 3,0 Gew.-%, bevorzugt von 1,5 bis 2,0 Gew.-%, wobei die Summe von MnO, Fe₂O₃ und Phosphat nicht über 100 Gew.-% sein darf.

Als Phosphat-Quelle können alle gängigen Alkali-, oder Erdalkaliphosphate, Di-, Tri,-Tetra-, Oligo- oder Polyphosphate sowie alle anderen bekannten organischen oder anorganischen Phosphate eingesetzt werden. Außerdem können Phosphoräure, Phosphinsäure, Phosphonsäure sowie deren Diphosphoranaloga und deren Salze verwendet werden. Es spielt dabei keine Rolle, ob es sich um primäre, sekundäre oder tertiäre Phosphate handelt. Auch die Wasserlöslichkeit, der Verglasungszustand oder der Kondensationszustand (z.B. Metaphosphate) der Phosphate spielt, wenn die Teilchendurchmischung ausreichend ist, keine Rolle für den Prozess.

Die Erfindung umfasst auch die Verwendung des Manganferrit-Schwarzpigments zur Einfärbung von anorganischen oder organischen Dispersionen, von Erzeugnissen der Farben-, Lack-, Beschichtungs-, Baustoff-, Kunststoff- und Papierindustrie, in Lebensmitteln, sowie in Produkten der Pharmaindustrie wie Tabletten. Dabei muss die Einhaltung der gesetzlich zugelassenen Schwermetallgehalte beachtet werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebige Kombinationen.

Anhand der nachfolgenden Beispiele wird die Erfindung näher erläutet, ohne das dadurch eine Einschränkung der Erfindung bewirkt werden soll.

### Beispiele

### I. Beschreibung der verwendeten Messmethoden

### A. Bestimmung des Eisen- und des Mangangehalts

Der Eisen- und der Mangangehalt wurde nach saurem Aufschluss und potentiometrischer Titration gemessen. Eine Einführung über elektrochemische Analysemethoden - zu denen auch die potentiometrische Titration gehört - befindet sich Beispielsweise im "Taschenatlas der Analytik", G. Schwedt, Thieme-Verlag 1996, ISBN 3-527-30870-9 S. 50 ff. Die Messmethode hat eine Bestimmungsgenauigkeit von 0,2 Gew.-%.

### B. Messung der Farbwerte in L64thix, Aufhellung

Das Pigment wurde mit dem Muller in einem nichttrocknenden Prüfbindemittel präpariert. Das Prüfbindemittel (Paste) besteht aus zwei Komponenten:

### Komponente 1

SACOLYD® L640 (Krems Chemie AG, Österreich, Alkydharz-Bindemittel auf Basis Leinöl und Phthalsäureanhydrid) (vormals ALKYDAL® L64 (Bayer AG, DE)). Es entspricht den Spezifikationen, die in den Normen DIN EN ISO 787-24 (Oktober 1995), ISO 787- 25:1993 und DIN 55983 (Dezember 1983) als Anforderungen an ein Prüfbindemittel für Farbpigmente genannt werden.

### Komponente 2

LUVOTHIX® HT (Lehmann & Voss & Co., Deutschland, pulverförmiges, modifiziertes, hydriertes Rizinusöl) als rheologisches Additiv, welches zum Thixotropieren der Paste zugesetzt wird. Es wurde in einer Konzentration von 5,0 Gew.-%, bezogen auf Komponente 1 eingesetzt.

Die Komponente 2 wurde in der Komponente 1 bei 75 - 95 °C gelöst. Die abgekühlte, stichfeste Masse wurde einmal über ein Dreiwalzwerk gegeben. Damit wurde die L64 Paste fertiggestellt. Verwendet wurde eine Teller-Farbenausreibmaschine (Muller), wie in DIN EN ISO 8780-5 (April 1995) beschrieben. Zur Anwendung kam ein ENGELSMANN JEL 25/53 Muller mit einem wirksamen Tellerdurchmesser von 24 cm. Die Drehzahl des unteren Tellers betrug ca. 75 min-1. Durch Einhängen eines 2,5 kg Belastungsgewichtes auf den Belastungsbügel wurde die Kraft zwischen den Tellern auf ca. 0,5 kN eingestellt.

Als Aufhellmittel wurde ein handelsübliches Titandioxidpigment, TRONOX® R-KB-2, Kerr-McGee Corp., US) (vorm. BAYERTITAN® R-KB-2 (Bayer AG, DE)), verwendet. R-KB-2 entspricht in seiner Zusammensetzung dem Typ R 2 in ISO 591 - 1977. Es wurde 0,4g zu prüfendes Pigment, 2,0 g TRONOX® R-KB-2 und 3,0 g Paste in fünf Stufen zu je 25 Umdrehungen nach dem in DIN EN ISO 8780-5 (April 1995) Abschnitt 8.1 beschriebenen Verfahren dispergiert.

Anschließend wurde die Pigment-Pasten-Mischung in einen Pastenteller eingestrichen, der in seiner Funktion dem Pastenteller in DIN 55983 (Dezember 1983) entspricht. Die zum Pastenteller gehörige Rakel wird über die mit der Pigment-Pasten-Mischung gefüllte Vertiefung des Tellers gezogen, so dass ein glatte Oberfläche entsteht. Die Rakel wird dabei in einer Richtung mit einer Geschwindigkeit von ca. 3 - 7 cm/s bewegt. Die glatte Oberfläche wird innerhalb weniger Minuten gemessen.

### C. Farbmessgerät

Es wurde ein Spektrophotometer ("Farbmessgerät") mit der Messgeometrie d/8 ohne Glanzfalle verwendet. Diese Messgeometrie ist in ISO 7724/2-1984 (E), Punkt 4.1.1, in DIN 5033 Teil 7 (Juli 1983), Punkt 3.2.4 und in DIN 53236 (Januar 1983), Punkt 7.1.1 beschrieben.

Zur Anwendung kam ein DATAFLASH® 2000-Meßgerät (Datacolor International Corp., USA). Das Farbmessgerät wurde gegen einen weißen, keramischen Arbeitsstandard kalibriert, wie in ISO 7724/2-1984 (E) Punkt 8.3 beschrieben. Die Reflexionsdaten des Arbeitsstandards gegen einen ideal mattweißen Körper sind im Farbmessgerät hinterlegt, so dass nach Kalibrierung mit dem weißen Arbeitsstandard alle Farbmessungen auf den ideal mattweißen Körper bezogen werden. Die Schwarzpunktkalibrierung wurde mit einem schwarzen Hohlkörper des Farbmessgeräteherstellers ausgeführt.

### D. Farbmessung

Das Ergebnis der Farbmessung ist ein Reflexionsspektrum. Aus dem Reflexionsspektrum kann jede beliebige farbmetrische Größe berechnet werden. Die in diesem Fall verwendeten farbmetrischen Größen werden gemäß der DIN 6174 (CIELAB-Werte) berechnet.

Eine eventuell vorhandene Glanzfalle ist ausgeschaltet. Die Temperatur von Farbmessgerät und Prüfling betrug ca. 25 °C ± 5 °C.

### E. Farbstärke

Die Farbwerte werden gemäß der oben beschriebenen Messung nach DIN 6174 (CIELAB-Werte) angegeben. Aus der Messung in der Aufhellung resultiert auch die relative Farbstärke des gemessenen Farbpigmentes gegen ein Vergleichspigment (im gegebenen Fall: Vergleichspigment). Das Vergleichspigment hat eine Farbstärke von 100 %.

Um aus diesen relativen Angaben einen absoluten Kennwert anzugeben, wurde das sogenannte "Verschnittverhältnis" berechnet. Das Verschnittverhältnis wurde gemäß der DIN-Norm 53235 Teil 1 und Teil 2 aus dem Jahr 1974 für den Farbtiefekennwert B 1/9 bestimmt. Anschaulich wird mit dem Verschnittverhältnis das Verhältnis einer farbgebenden Substanz zu einer Mischkomponente (im gegebenen Fall: TiO₂) angegeben, mit der eine definierte Farbtiefe (Einfärbungstiefe) gemäß der DIN-Norm 53235 Teil 1 und 2 aus dem Jahr 1974 erreicht wird. Ein hohes Verschnittverhältnis bedeutet, dass mit weniger Pigment die gleiche Einfärbungstiefe erreicht werden kann. Ein solches Pigment ist deshalb in der praktischen Anwendung farbstärker. Ein Verschnittverhältnis für den Farbtiefekennwert B 1/9 nach DIN 53235 Teil 1 und 2 von größer als -10 entspricht einer mindestens 45 % höheren Farbstärke als dem Vergleichspigment.

### F. Andere Geräte

Als Rühraggregat wurde ein Ultraturrax-Rührer verwendet.

Als Glühapparatur sind gängige Öfen (z.B. Muffelofen, Drehflammofen, Rotationsöfen usw.) geeignet solange der Sauerstoffgehalt im Glühraum von 5 % bis 25 % ist.

Als Mahlaggregat eignen sich alle gängigen Zerkleinerungsaggregate für anorganische Pigmente wie beispielsweise Scheibenschwingmühlen, Sichtermühlen oder Strahlmühlen.

### II. Beispiel 1

Die Ausgangsstoffe Eisenoxid (Fe₃O₄), Manganoxid (MnO₂), und Natriumchlorid entsprechen in ihren Eigenschaften den Voraussetzungen aus DE 1 767 868 A1 Beispiel 1.

321,5 g einer Fe₃O₄-Suspension mit einem Gehalt von 31,1 Gew.-% Fe gerechnet als Fe₂O₃ werden mit 14 g Braunstein (Gehalt Mangan: 67,3 Gew.-% gerechnet als MnO), 2,3 g Natriumchlorid und 2,8 g Natriumtripolyphosphat versetzt, mit einem geeignetem Rühraggregat innig vermischt, auf einer Nutsche abgesaugt, der Filterkuchen bei 240 °C getrocknet in einer Reibschale homogenisiert und anschließend 15 Minuten bei 800 °C geglüht, in einer Reibschale erneut homogenisiert und weitere 25 Minuten bei 800 °C geglüht. Anschließend wird das entstehende Pigment in einem geeigneten Gerät gemahlen.

Das entstandene Pigment hat gegen das Vergleichspigment eine Farbstärke von 146 %. Das Verschnittverhältnis für Farbtiefekennwert B 1/9 beträgt -9,7.

Das Pigment in Vergleichsbeispiel 1, welches ohne Phosphatdotierung geglüht wurde hat gegen das Vergleichspigment hingegen nur eine Farbstärke von 75 %, welches einem Farbtiefekennwert von -17,2 entspricht.

### III. Beispiel 2

Die Ausgangsstoffe Eisenoxid (Fe₃O₄), Manganoxid (MnO₂), und Natriumchlorid entsprechen in ihren Eigenschaften den Voraussetzungen aus DE 1 767 868 A1 Beispiel 1.

321,5 g einer Fe₃O₄-Suspension mit einem Gehalt von 31,1 Gew.-% Fe gerechnet als Fe₂O₃ werden mit 22 g Braunstein (Gehalt Mangan: 67,3 Gew.-% gerechnet als MnO), 2,3 g Natriumchlorid und 3,0 g Natriumtripolyphosphat versetzt, mit einem geeignetem Rühraggregat innig vermischt, auf einer Nutsche abgesaugt, der Filterkuchen bei 240 °C getrocknet in einer Reibschale homogenisiert und anschließend 15 Minuten bei 800 °C geglüht, in einer Reibschale erneut homogenisiert und weitere 25 Minuten bei 800 °C geglüht. Anschließend wurde das entstehende Pigment in einem geeigneten Gerät gemahlen.

Das entstandene Pigment hat gegen das Vergleichspigment eine Farbstärke von 168 %. Das Verschnittverhältnis für Farbtiefekennwert B 1/9 beträgt -8,0.

Das Pigment in Vergleichsbeispiel 2, welches ohne Phosphatdotierung geglüht wurde hat gegen das Vergleichspigment hingegen nur eine Farbstärke von 79 %, welches einem Farbtiefekennwert von -16,5 entspricht.

### IV. Beispiel 3

Die Ausgangsstoffe Eisenoxid (Fe₃O₄), Manganoxid (MnO₂), und Natriumchlorid entsprechen in ihren Eigenschaften den Voraussetzungen aus DE 1 767 868 A1 Beispiel 1.

321,5 g einer Fe₃O₄-Suspension mit einem Gehalt von 31,1 Gew.-% Fe gerechnet als Fe₂O₃ werden mit 31 g Braunstein (Gehalt Mangan: 67,3 Gew.-% gerechnet als MnO), 2,3 g Natriumchlorid und 3,1 g Natriumtripolyphosphat versetzt, mit einem geeignetem Rühraggregat innig vermischt, auf einer Nutsche abgesaugt, der Filterkuchen bei 240 °C getrocknet in einer Reibschale homogenisiert und anschließend 15 Minuten bei 800 °C geglüht, in einer Reibschale erneut homogenisiert und weitere 25 Minuten bei 800 °C geglüht. Anschließend wurde das entstehende Pigment in einem geeigneten Gerät gemahlen.

Das entstandene Pigment hat gegen das Vergleichspigment eine Farbstärke von 177 %. Das Verschnittverhältnis für Farbtiefekennwert B 1/9 beträgt -7,3.

Das Pigment in Vergleichsbeispiel 3, welches ohne Phosphatdotierung geglüht wurde hat gegen das Vergleichspigment hingegen nur eine Farbstärke von 86 % welches einem Farbtiefekennwert B 1/9 von -15,6 entspricht.

### V. Beispiel 4

Die Ausgangsstoffe Eisenoxid (Fe₃O₄), Manganoxid (MnO₂), und Natriumchlorid entsprechen in ihren Eigenschaften den Voraussetzungen aus DE 1 767 868 A1 Beispiel 1.

321,5 g einer Fe₃O₄-Suspension mit einem Gehalt von 31,1 Gew.-% Fe gerechnet als Fe₂O₃ werden mit 41,5 g Braunstein (Gehalt Mangan: 67,3 Gew.-% gerechnet als MnO), 2,3 g Natriumchlorid und 3,3 g Natriumtripolyphosphat versetzt, mit einem geeignetem Rühraggregat innig vermischt, auf einer Nutsche abgesaugt, der Filterkuchen bei 240 °C getrocknet in einer Reibschale homogenisiert und anschließend 15 Minuten bei 800 °C geglüht, in einer Reibschale erneut homogenisiert und weitere 25 Minuten bei 800 °C geglüht. Anschließend wurde das entstehende Pigment in einem geeigneten Gerät gemahlen.

Das entstandene Pigment hat gegen das Vergleichspigment eine Farbstärke von 184 %. Das Verschnittverhältnis für Farbtiefekennwert B 1/9 beträgt -6,7.

Das Pigment in Vergleichsbeispiel 4, welches ohne Phosphatdotierung geglüht wurde hat gegen das Vergleichspigment hingegen nur eine Farbstärke von 88 % welches einem Farbtiefekennwert B 1/9 von -15,3 entspricht.

### VI. Beispiel 5

Die Ausgangsstoffe Eisenoxid (Fe₃O₄), Manganoxid (MnO₂), und Natriumchlorid entsprechen in ihren Eigenschaften den Voraussetzungen aus DE 1 767 868 A1 Beispiel 1.

161 g einer Fe₃O₄-Suspension mit einem Gehalt von 31,1 Gew.-% Fe gerechnet als Fe₂O₃ werden mit 38,0 g Braunstein (Gehalt Mangan: 67,3 Gew.-% gerechnet als MnO), 1,5 g Natriumchlorid und 2,0 g Natriumtripolyphosphat versetzt, mit einem geeignetem Rühraggregat innig vermischt, auf einer Nutsche abgesaugt, der Filterkuchen bei 240 °C getrocknet in einer Reibschale homogenisiert und anschließend 15 Minuten bei 800 °C geglüht, in einer Reibschale erneut homogenisiert und weitere 25 Minuten bei 800 °C geglüht. Anschließend wurde das entstehende Pigment in einem geeigneten Gerät gemahlen.

Das entstandene Pigment hat gegen das Vergleichspigment eine Farbstärke von 167 %. Das Verschnittverhältnis für Farbtiefekennwert B 1/9 beträgt -7,7.

### VII. Vergleichspgiment

Die Ausgangsstoffe Eisenoxid (Fe₃O₄), Manganoxid (MnO₂), und Natriumchlorid entsprechen in ihren Eigenschaften den Voraussetzungen aus DE 1 767 868 A1 Beispiel 1.

161 g einer Fe₃O₄-Suspension mit einem Gehalt von 31,1 Gew.-% Fe gerechnet als Fe₂O₃ werden mit 38 g Braunstein (Gehalt Mangan: 67,3 Gew.-% gerechnet als MnO), 1,5 g Natriumchlorid und ohne Natriumtripolyphosphat versetzt, mit einem geeignetem Rühraggregat innig vermischt, auf einer Nutsche abgesaugt, der Filterkuchen bei 240 °C getrocknet in einer Reibschale homogenisiert und anschließend 15 Minuten bei 800 °C geglüht, in einer Reibschale erneut homogenisiert und weitere 25 Minuten bei 800 °C geglüht. Anschließend wurde das entstehende Pigment in einem geeigneten Gerät gemahlen.

Das entstandene Pigment wird als Vergleichspigment für die oben beschriebenen Beispiele verwendet. Dessen Farbstärke wird auf 100% gesetzt. Das Verschnittverhältnis für Farbtiefekennwert B 1/9 beträgt -14,0.

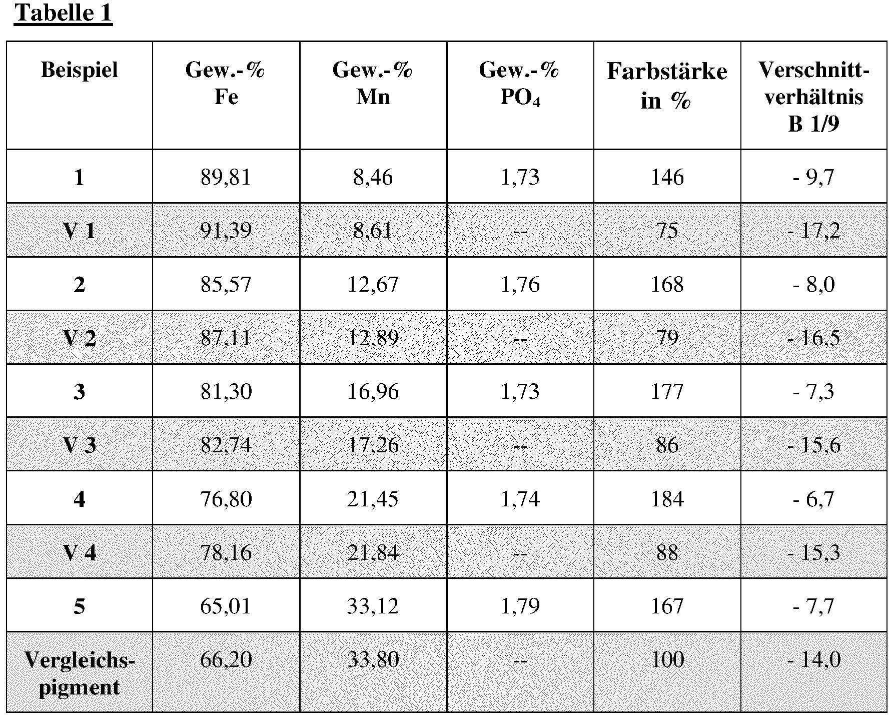

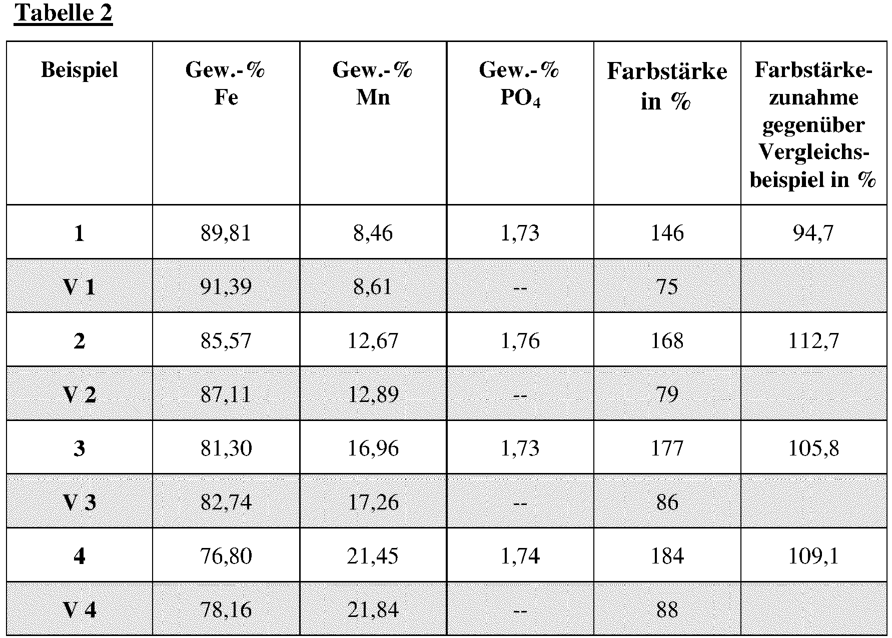

## Patentansprüche

1. Manganferrit-Schwarzpigmente mit einem Gehalt von MnO von 5,0 bis 40,0 Gew.-%, einem Gehalt an Phosphat von 1,5 bis 3,0 Gew.-%, die ein Verschnittverhältnis für den Farbtiefekennwert B 1/9 nach DIN 53235 Teil 1 und 2 von > -12,0, insbesondere > -10,0, aufweisen.

2. Manganferrit-Schwarzpigmente gemäß Anspruch 1, **dadurch gekennzeichnet, dass** die Pigmente einen Gehalt von MnO von 8,0 bis 35,0 Gew.-% aufweisen.

3. Manganferrit-Schwarzpigmente gemäß Anspruch 1, **dadurch gekennzeichnet, dass** die Pigmente einen Gehalt an Phosphat von 1,5 bis 2,0 Gew.-%, insbesondere von 1,7 bis 1,8 Gew.-% aufweisen.

4. Manganferrit-Schwarzpigmente gemäß Anspruch 1, **dadurch gekennzeichnet, dass** die Pigmente ein Verschnittverhältnis für den Farbtiefekennwert B 1/9 nach DIN 53235 Teil 1 und 2 von -10,0 bis -6,0 aufweisen.

5. Manganferrit-Schwarzpigmente nach einem oder mehreren der Ansprüche 1 bis 4, **dadurch gekennzeichnet, dass** die Farbstärke der Pigmente von 40 % bis 120 % stärker, insbesondere von 90 % bis 115 %, stärker ist gegenüber Manganferrit-Farbpigmenten, die einen Phosphatgehalt von < 0,5 % aufweisen.

6. Verfahren zur Herstellung eines Manganferrit-Schwarzpigments nach einem oder mehreren der Ansprüche 1 bis 5, **dadurch gekennzeichnet, dass**
• oxidische oder oxidbildende Ausgangsstoffe des Eisens und Mangans unter Zusatz von Alkalisalzen und organischen und/oder anorganischen Phosphaten miteinander gemischt werden, und
• die Mischung anschließend bei Temperaturen oberhalb von 600 °C, insbesondere oberhalb von 700 °C geglüht wird, wobei die Glühatmosphäre einen Sauerstoffgehalt von 7 bis 25 % aufweist.

7. Verfahren zur Herstellung eines Manganferrit-Schwarzpigments gemäß Anspruch 6, **dadurch gekennzeichnet, dass**
• der Gehalt von MnO von 5 bis 40 Gew.-%, insbesondere von 8,0 bis 35,0 Gew.-%;
• der Gehalt von Fe, gerechnet als Fe₂O₃, von 50,0 bis 95,0 Gew.-%, insbesondere von 65,0 bis 90,0 Gew.-%; und
• der Gehalt an Phosphat von 1,5 bis 3,0 Gew.-%, insbesondere von 1,5 bis 2,0 Gew.-%
beträgt, wobei die Summe von MnO, Fe₂O₃ und Phosphat nicht über 100 Gew.-% sein darf.

8. Verwendung des Manganferrit-Schwarzpigments nach einem oder mehreren der Ansprüche 1 bis 5, hergestellt nach einem oder mehreren der Ansprüche 6 bis 7, zur Einfärbung von anorganischen oder organischen Dispersionen, von Erzeugnissen der Farben-, Lack-, Beschichtungs-, Baustoff-, Kunststoff- und Papierindustrie, in Lebensmitteln, sowie in Produkten der Pharmaindustrie wie Tabletten.
